(19) Europäisches Patentamt
European Patent Office
Office européen des brevets

(11) EP 0 989 168 A1

(12) EUROPEAN PATENT APPLICATION

(43) Date of publication:
29.03.2000 Bulletin 2000/13

(51) Int Cl.[7]: **C09D 151/08**, C08F 290/06

(21) Application number: **99402360.4**

(22) Date of filing: **28.09.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.09.1998 JP 27397898**
**29.03.1999 JP 8651599**

(71) Applicant: **Daicel Chemical Industries, Ltd.**
**Sakai-shi, Osaka-fu (JP)**

(72) Inventor: **Inokami, Kiyotaka**
**Takasago-shi, Hyogo-ken (JP)**

(74) Representative: **Portal, Gérard et al**
**Cabinet Beau de Loménie**
**158, rue de l'Université**
**75340 Paris Cédex 07 (FR)**

(54) **Water-based coating composition**

(57) The present invention provides a water-based coating composition having improved water resistance, weatherability and particularly improved staining resistance.

This water-based coating composition comprises a water-based emulsion and colloidal silica in the range of 9 : 1 to 5.5 : 4.5 (based on the weight of the solid). This water-based emulsion is obtained via emulsification by addition of water to a resin solution which is obtained via solution polymerisation of 0.5% to 50% by weight of an unsaturated polymerisable monomer (A) which has a hydrolysable silyl group, 1% to 20% by weight of an unsaturated polymerisable monomer (B) having an ion-formable group, 1% to 40% by weight of an unsaturated polymerisable monomer (C) having a polymethyl siloxane structure and the remaining ratio by weight of another unsaturated polymerisable monomer. The polymerisation solvent of the resin emulsion is then removed to give the target water-based emulsion.

EP 0 989 168 A1

## Description

### Field of the invention

The present invention relates to a water-based coating composition which can be suitably used for an under coat, over coat, clear coat lining or the like of wooden materials, plastics, papers, metals and other various materials.

Further, the present invention relates to a water-based coating composition having high coatability even at a low temperature-baking.

### Background of the invention

Recently, in the field of coating materials, there is a tendency of using water-based solvents or diluents instead of organic ones because of environmental problems. However, water-based coatings of the prior art have no crosslinkable functional groups and, for this reason, they have drawbacks such as lower water resistance of the film they form, solvent resistance, adhesion and weatherability compared to coatings using organic solvents. Further, even regarding water-based coatings, from a point of view of a maintenance-free coating, there are some needs regarding staining resistance (resistance to pollution which makes a coating dirty).

Water-based coatings using emulsions of resins having an alkoxysilyl group which is one kind of hydrolysable silyl group have been proposed as water-based coatings containing crosslinkable functional groups (for example, in JP-A-03-021610). Water-based coatings having improved water resistance, solvent resistance and adhesion have been obtained by using such water-based coatings. However, weatherability and staining resistance of such water-based coatings are not sufficient.

A method consisting of co-polymerizing a polymerisable unsaturated monomer containing a polydimethyl siloxane structure in a resin is known as a method for improving film weatherability and staining resistance. However, polymerisability of reactive polydimethyl siloxane is lower than polymerisability of other monomers when carrying out a synthesis in an emulsion-polymerization system. For this reason, a large amount of aggregates is formed ; further, in order to obtain a stable resin composition, the amount of reactive polydimethyl siloxane has to be reduced but expected weatherability and staining resistance cannot be obtained.

### Summary of the invention

The purpose of the present invention is to solve the problems of the prior art and to provide a water-based coating composition containing a resin having an alkoxysilyl group as a hydrolysable silyl group and having excellent solvent resistance, stable adhesion on a base material, further excellent water resistance, weatherability and staining resistance and more particularly improved staining resistance.

The inventor of the present invention found as a result of intensive investigations that the purpose of the present invention can be achieved via a water-based coating which has water resistance and a particularly improved staining resistance and which is obtained from a specific water-based emulsion obtained from a specific monomer composition and a colloidal silica mixed together in a specific mixing ratio.

Further, the purpose of the invention is to provide a water-based coating composition having a particularly high staining resistance via using the above-mentioned coating composition having excellent properties and having a high coatability even at a low temperature-baking.

As a result of intensive investigations, the inventor found that when using a colloidal silica which has been surface-treated by a specific silane compound, the condensation reaction of the colloidal silica and the condensation reaction between the colloidal silica and the silanol inside the emulsion progress at a relatively low temperature such as, for example, a temperature of 80°C and it is possible to obtain high coatability even at a low temperature-baking.

The present invention relates to a water-based coating composition containing a water-based emulsion and colloidal silica. This water-based coating composition is characterized in that the former water-based emulsion is obtained via emulsifying a resin solution by adding water therein, this resin solution being obtained via a solution polymerisation of a mixture containing :

- from 0.5% to 50% by weight of a polymerisable unsaturated monomer (A) which contains a hydrolysable silyl group ;
- from 1% to 20% by weight of a polymerisable unsaturated monomer (B) which contains at least one kind of ionformable group ;
- from 1% to 40% of a polymerisable unsaturated monomer (C) which has a polydimethyl siloxane structure ; and
- the remaining weight ratio [100- (A) - (B) - (C)] of another polymerisable unsaturated monomer (D) ;

the weight ratio of the water-based emulsion and said colloid silica being as follows in the resulting solid :

water-based emulsion : colloidal silica : from 9 : 1 to 5.5 : 4.5.

Preferably, the ratio of water-based emulsion/colloidal silica is preferably comprised in the following range :

water-based emulsion/colloid silica : from 8.5 /1.5 to 7 : 3.

Further, high film-properties even at low baking temperature is preferably obtained via using colloidal silica which has been surface-treated with a silane compound shown in Formula S :

$$SiR^{S1}_{X+1}\,(OR^{S2})_{3-X} \qquad (S)$$

(wherein $R^{S1}$ is a hydrogen atom or a hydrocarbon group having from 1 to 10 carbon atoms, $R^{S2}$ is a hydrogen atom or a hydrocarbon group having from 1 to 10 carbon atoms and containing an ether bond and « x » is an integer from 0 to 2).

Since the water-based coating composition of the present invention contains a specific ratio of a specific emulsion and colloidal silica, it has water resistance and particularly excellent staining resistance.

Consequently, this water-based coating may be used as an under coat, over coat, clear coat, lining or the like for various materials.

Further, the water-based coating of the invention involves few risks regarding air pollution, toxicity, flammability or the like.

**Brief Description of Drawings**

- Fig. 1 shows data made by picture processing after two weeks of an exposure test of Example 2;
- Fig. 2 shows data made by picture processing after nine weeks of exposure test of example 2 ;
- Fig. 3 shows data made by picture processing of Example 2 after washing with water of water supply ;
- Fig. 4 shows data made by picture processing after two weeks of exposure test of comparative example 1 ;
- Fig. 5 shows data made by picture processing after nine weeks of exposure test of comparative example 1 ;
- Fig. 6 shows data made by picture processing of Comparative Example 1 after washing with water of water supply ;
- Fig. 7 shows data made by picture processing after two weeks of exposure test of comparative example 7 ;
- Fig. 8 shows data made by picture processing after nine weeks of exposure test of comparative example 7 ; and
- Fig. 9 shows data made by picture processing of Comparative Example 7 after washing with water of water supply.

**Detailed description of the invention**

First, each of the components used for copolymerisation of the water-based emulsion resin in the present invention will be explained hereinafter. In the present invention, a polymerisable unsaturated monomer (A) containing a hydrolysable silyl group is used as one of copolymerisable component.

Due to the presence of this monomer (A), the hydrolysable silyl groups acts as a crosslinkable functional group during the formation of a coating and thus enables improvements of the water resistance, solvent resistance and coatability of the resulting coating.

The unsaturated monomer containing a hydrolysable silyl group (A) may be, for example, an unsaturated monomer containing a hydrolysable silyl group as shown in General Formula (3) :

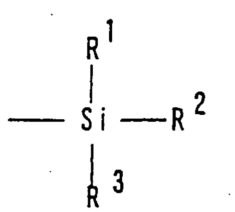

(3)

(wherein $R^1$, $R^2$, and $R^3$ are identical or different ; halogen atoms, alkyl groups, aryl groups, aralkyl groups, alkoxy groups, aryloxy groups, acyloxy groups, hydroxyl groups, amino groups, aminoxy groups, alkylthio groups ; at least one of $R^1$ to $R^3$ being a halogen atom, an alkoxy group or a hydroxyl group).

The hydrolysable silyl group includes normally at least one halogen atom represented by at least one of a

group selected from $R^1$ to $R^3$, an alkoxy group and a hydroxyl group.

The halogen atom in the silyl group shown in Formula (3) is for example a fluorine atom, a chlorine atom, a bromine atom and iodine atom or the like and usually a chlorine atom.

The alkyl groups comprise for example methyl group, ethyl group, propyl group, butyl group, pentyl group, hexyl group or another alkyl group containing 1 to 10 carbon atoms. The aryl groups comprise for example phenyl group or other aryl group containing from 6 to 10 carbon atoms. The aralkyl groups comprise for example benzyl group or other arakyl group containing from 7 to 10 carbon atoms.

The alkoxy group comprises for example methoxy group, ethoxy group, propoxy group, isopropoxy group, butoxy group, isobutoxy group, t-butoxy group, pentyloxy group, hexyloxy group, octyloxy group, decyloxy group, dodecyloxy group or other alkoxy groups containing from 1 to 16 carbon atoms. Preferably, these alkoxy groups are alkoxy groups containing from 1 to 4 carbon atoms and particularly methoxy group and ethoxy group. The alkoxy groups also comprise substituted alkoxy groups such as for example methoxyethoxy group.

The aryloxy groups comprise for example phenoxy groups or other aryloxy groups containing from 6 to 10 carbon atoms. The acyloxy groups comprise, for 5 example, acetyloxy groups, propionyloxy groups, butyryloxy groups or other acyl groups containing from 2 to 6 carbon atoms.

The amino groups can also comprise, for example, substituted amino groups such as dimethylamino group ; aminooxy group can also comprise, for example, substituted groups such as dimethylaminooxy group. The alkylthio 10 groups comprise for example alkylthio groups containing from 1 to 6 carbon atoms such as methylthio group or ethyl thio group.

A polymerisable unsaturated monomer (A) containing the hydrolysable silyl group may be for example the compound shown in Formulae 4 to 15 described hereinafter.

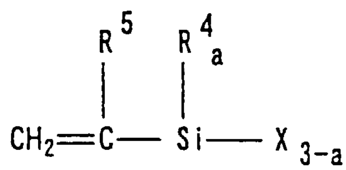

(4)

(wherein $R^4$ is an alkyl group containing from 1 to 10 carbon atoms, an aryl group containing from 6 to 10 carbon atoms or an aralkyl group containing from 7 to 10 carbon atoms, $R^5$ is a hydrogen atom or a methyl group, X is a fluorine atom, a chlorine atom, a bromine atom or an iodine atom ; « a » is an integer from 0 to 2).

Such a compound may be for example, vinyltrichlorosilane, vinylmethyldichlorosilane, vinylmethylchlorosilane, vinylmethylphenylchlorosilane, isopropenyltrichlorosilane, isopropenylmethyldichlorosilane, isopropenyldimethylchlorosilane, isopropenylmethylphenylchlorosilane.

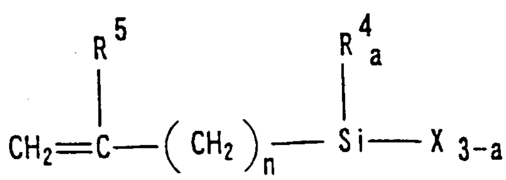

(5)

(wherein $R^4$ is an alkyl group containing from 1 to 10 carbon atoms, an aryl group containing from 6 to 10 carbon atoms or an aralkyl group containing from 7 to 10 carbon atoms, $R^5$ is a hydrogen atom or a methyl group, X is a fluorine atom, a chlorine atom, a bromine atom or an iodine atom ; « a » is an integer from 0 to 2 and « n » is an integer from 1 to 12).

Alkyltrichlorosilane, alkylmethyldichlorosilane, allyldimethylchlorosilane or the like may be given as examples of such compounds.

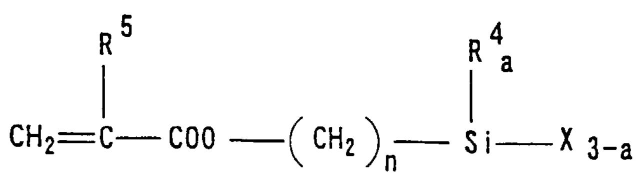

(6)

(wherein $R^4$ is an alkyl group containing from 1 to 10 carbon atoms, an aryl group containing from 6 to 10 carbon atoms or an aralkyl group containing from 7 to 10 carbon atoms, $R^5$ is a hydrogen atom or a methyl group, X is a fluorine atom, a chlorine atom, a bromine atom or an iodine atom ; « a » is an integer from 0 to 2 and « n » is an integer from 1 to 12).

2-(meth)acryloxyethyltrichlorosilane, 2-(meth)acryloxypropyltrichlorosilane, 2-(meth)acryloxyethylmethyldichlorosilane, 3-(meth)acryloxypropylmethyldichlorosilane, 2-(meth)acryloxyethyldimethylchlorosilane, 3-(meth)acryloxypropyldimethylchlorosilane or the like may be given as examples of such compounds.

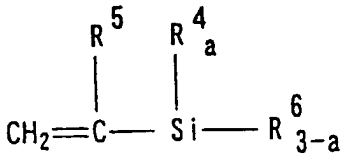

(7)

(wherein $R^4$ is an alkyl group containing from 1 to 10 carbon atoms, an aryl group containing from 6 to 10 carbon atoms or an aralkyl group containing from 7 to 10 carbon atoms, $R^5$ is a hydrogen atom or a methyl group, $R^6$ is an alkoxy group containing from 1 to 16 carbon atoms and «a » is an integer from 0 to 2).

Vinyltrimethoxysilane, vinyltriethoxysilane, vinyltributoxysilane, vinyltri(hexyloxy)silane, vinyltri(octyloxy)silane, vinyltri(decyloxy)silane, vinyltri(dodecyloxy)silane, vinyldimethoxymethylsilane, vinyldiethoxymethylsilane, vinylmethoxydimethylsilane, vinylethoxydimethylsilane, vinylbutoxydimethylsilane, vinyldiphenylethoxysilane, isopropenyltrimethoxysilane, isopropenyltriethoxysilane, isopropenyltributoxysilane, isopropenyltri(hexyloxy)silane, isopropenyltri(octyloxy)silane, isopropenyltri(decyloxy)silane, isopropenyltri(dodecyloxy)silane, isopropenyldimethoxymethylsilane, isoproipenyldiethoxymethylsilane, isopropenylmethoxydimethylsilane, isopropenylethoxydimethylsilane, isopropenylbutoxydimethylsilane, vinyltris(2-methoxyethoxy)silane or the like may be given as examples of such compounds.

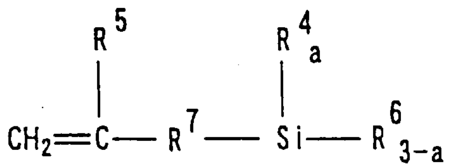

(8)

(wherein $R^4$ is an alkyl group containing from 1 to 10 carbon atoms, an aryl group containing from 6 to 10 carbon atoms or an aralkyl group containing from 7 to 10 carbon atoms, $R^5$ is a hydrogen atom or a methyl group, $R^6$ is an alkoxy group containing 1 to 16 carbon atoms, $R^7$ is an alkylene group containing from 1 to 12 carbon atoms or a phenylene group ; « a » is an integer from 0 to 2).

Alkyltrimethoxysilane, vinyldecyltrimethoxysilane, vinyloctyltrimethoxysilane, vinylphenyltrimethoxysilane, vinylphenyldimethoxymethylsilane, vinylphenyldimethoxydimethylsilane, isopropenylphenyltrimethoxysilane, isopropenylphenyldimethoxymethylsilane, isopropenylphenylmethoxydimethylsilane may be given as examples of such compounds.

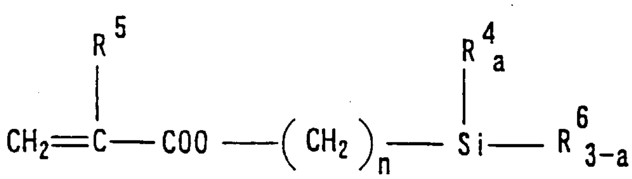

(9)

(wherein $R^4$ is an alkyl group containing from 1 to 10 carbon atoms, an aryl group containing from 6 to 10 carbon atoms or an aralkyl group containing from 7 to 10 carbon atoms, $R^5$ is a hydrogen atom or a methyl group, $R^6$ is an alkoxy group containing from 1 to 16 carbon atoms, « a » is an integer from 0 to 2 and « n » is an integer from 1 to 12) .

2-(meth)acryloxyethyltrimethoxysilane, 2-(meth)acryloxyethyltriethoxysilane, 3-(meth)acryloxypropyltrimethoxysilane, 3-(meth)acryloxypropyltriethoxysilane, 3-(meth)acryloxypropylmethyldimethoxysilane, 3-(meth)acryloxypropyldiethoxymethylsilane, 3-(meth)acryloxypropyltris(2-methoxyethoxy)silane may be given as examples of such

compounds.

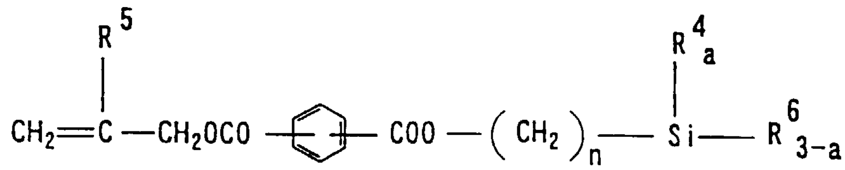

(10)

(wherein $R^4$ is an alkyl group containing from 1 to 10 carbon atoms, an aryl group containing from 6 to 10 carbon atoms or an aralkyl group containing from 7 to 10 carbon atoms, $R^5$ is a hydrogen atom or a methyl group ; $R^6$ is an alkoxy group containing from 1 to 16 carbon atoms, « a » is an integer from 0 to 2 and « n » is an integer from 1 to 12) .

3-(allyloxycarbonyl-o-phenylenecarboxy)propyltrimethoxysilane, 3-(allyloxycarbonyl-o-phenylenecarboxy)propyldimethoxymethylsilane, 3-(allyloxycarbonyl-o-phenylenecarboxy)propylmethoxydimethylsilane, 3-(isopropenylmethylenoxycarbonyl-o-phenylenecarboxy)propyltrimethoxysilane, 3-(isopropenylmethyleneoxycarbonyl-o-phenylenecarboxy)propyldimethoxymethylsilane, 3-(isopropenylmethyleneoxycarbonyl-o-phenylenecarboxy)propylmethoxydimethylsilane or the like can be given as examples of such compounds.

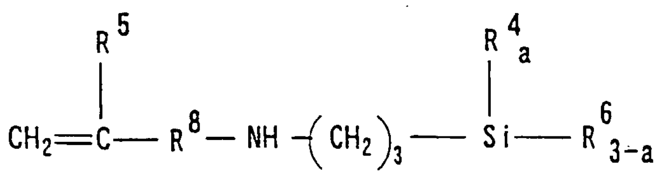

(11)

(wherein $R^4$ is an alkyl group containing from 1 to 10 carbon atoms, an aryl group containing from 6 to 10 carbon atoms or an aralkyl group containing from 7 to 10 carbon atoms, $R^5$ is a hydrogen atom or a methyl group ; $R^6$ is an alkoxy group containing from 1 to 16 carbon atoms, $R^8$ is a phenylene group, a

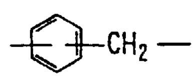

group and « a » is an integer from 0 to 2).

3-(vinylphenylamino)propyltrimethoxysilane, 3-(vinylphenylamino)propyltriethoxysilane, 3-(vinylbenzylamino)propyltrimethoxysilane, 3-(vinylbenzylamino)propyltriethoxysilane or the like may be given as example of such compounds.

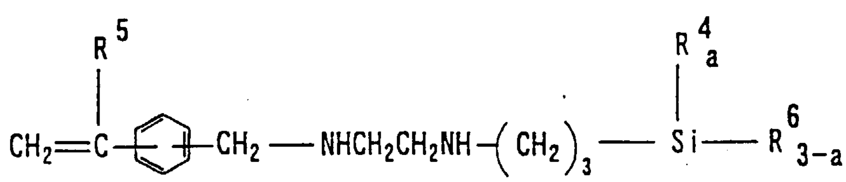

(12)

(wherein $R^4$ is an alkyl group containing from 1 to 10 carbon atoms, an aryl group containing from 6 to 10 carbon atoms or an aralkyl group containing from 7 to 10 carbon atoms, $R^5$ is a hydrogen atom or a methyl group ; $R^6$ is an alkoxy group containing from 1 to 16 carbon atoms, « a » is an integer from 0 to 2) 3-(vinylphenylenemethylene(aminoethylamino))propyltrimethoxysilane, 3-(isopropenylphenylenemethylene(aminoethylamino))propyltrimethoxysilane can be given as examples of such compounds.

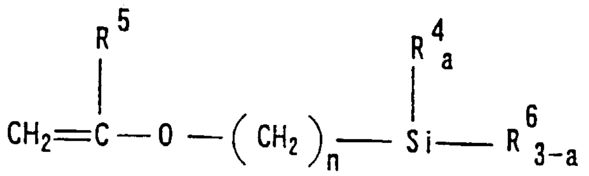

(13)

(wherein $R^4$ is an alkyl group containing from 1 to 10 carbon atoms, an aryl group containing from 6 to 10 carbon atoms or an aralkyl group containing from 7 to 10 carbon atoms, $R^5$ is a hydrogen atom or a methyl group ; $R^6$ is an alkoxy group containing from 1 to 16 carbon atoms, « a » is an integer from 0 to 2 and « n » is an integer from 1 to 12).

2-(vinyloxy)ethyltrimethoxysilane, 3-(vinyloxy)propyltrimethoxysilane, 4-(vinyloxy)butyltriethoxysilane, 2-(isopropenyloxy)ethyltrimethoxysilane or the like may be given as examples of such compounds.

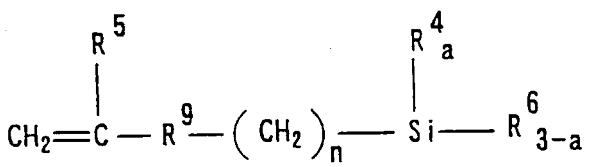

(14)

(wherein $R^4$ is an alkyl group containing from 1 to 10 carbon atoms, an aryl group containing from 6 to 10 carbon atoms or an aralkyl group containing from 7 to 10 carbon atoms, $R^5$ is a hydrogen atom or a methyl group ; $R^6$ is an alkoxy group containing from 1 to 16 carbon atoms, $R^9$ is a $-CH_2O-$ group or a $-CH_2OCO-$group ; « a » is an integer from 0 to 2 and « n » is an integer from 1 to 12).

3-(allyloxy)propyltrimethoxysilane, 10-(allyloxycarbonyl)decyltrimethoxysilane, 3-(isopropenylmethyleneoxy) propyltrimethoxysilane, 10-(isopropenylmethyleneoxycarbonyl)decyltrimethoxysilane or the like can be given as examples of such compounds.

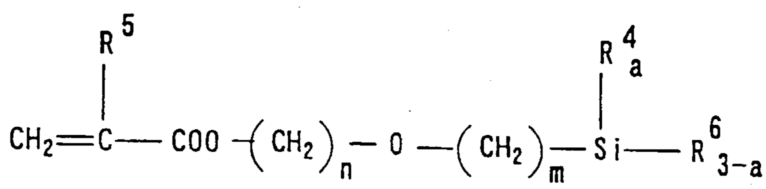

(15)

(wherein $R^4$ is an alkyl group containing from 1 to 10 carbon atoms, an aryl group containing from 6 to 10 carbon atoms or an aralkyl group containing from 7 to 10 carbon atoms, $R^5$ is a hydrogen atom or a methyl group ; $R^6$ is an alkoxy group containing from 1 to 16 carbon atoms, « a » is an integer from 0 to 2, « n » and « m » are integers from 1 to 12).

3-[(meth)acryloxyethyleneoxy]propyltrimethoxysilane, 3-[(meth)acryloxyethyleneoxy]propyldimethoxymethylsilane or the like can be given as examples of such compounds.

Moreover, the unsaturated polymerisable monomer (A) containing a hydrolysable silyl group may also be compounds containing a divinyl group such as divinylmethoxysilane, divinyldiethoxysilane, divinyldi(β-methoxyethoxy) silane or the like.

The unsaturated polymerisable monomer (A) containing a hydrolysable silyl group can be used solely or in combination of two or more kinds. Monomers containing silyl-group which are removable, economically interesting and whose side-reaction can be controlled such as vinyl-type monomers containing an alkoxysilyl group are preferably used.

In the present invention, an unsaturated polymerisable monomer (B) which contains at least one sort of ion-formable group is used as a copolymerisation component for the resin. The use of such a monomer (B) enables obtaining polymers which contain ion-formable groups and which are easily emulsified.

Amino groups, imide groups or other cation-formable groups and carboxyl group or other anion-formable groups may be given as examples of ion-formable groups.

Consequently, dimethylaminoethyl(meth)acrylate, diethylaminoethyl(meth)acrylate, dimethylaminopropyl (meth)acrylate), diethylaminopropyl(meth)acylate, dimethylaminoethyl(meth)acrylamide, (meth)acryloyloxyethyltrimethyl ammonium chloride, (meth)acryloyloxyethyltrimethyl ammonium methosulphate or the like may be given as examples of monomer (B) containing a cation-formable group. Such monomers (B) which contain a cation-formable group may be used alone or in mixture of two or more of these monomers.

Carboxyethyl(meth)acrylate, carboxypropyl(meth)acrylate, vinylcarboxylic acid ((meth)acrylic acid, ethacrylic acid, crotonic acid, sorbic acid, maleic acid, itaconic acid, cinnamic acid or the like), vinylsulphonic acid (vinylsulphonic acid, allylsulphonic acid, vinyltoluene sulphonic acid, styrenesulphonic acid or the like), (meth)acrylsulphonic acid (sulphoethyl(meth)acrylate, sulphopropyl(meth)acrylate or the like), (meth)acrylamide sulphonate [2-acrylamide-2-methylpropane sulphonate or the like] can be given as examples. Such monomers (B) containing an anion-formable group may be used alone or in mixture of two or more kinds of these monomers.

In the present invention, a polymerisable unsaturated monomer (C) having a polydimethylsiloxane structure is used as one copolymerisable component for the resin. It is possible by using such a polymerisable unsaturated monomer (C) having a polydimethylsiloxane structure to improve the wheaterability and the staining resistance of the resin obtained.

The polydimethylsiloxanes having as terminal a vinyl group or a (meth)acryloxy group as shown in the following Formulae (1) and (2) can be given as examples of such polymerisable unsaturated monomer (C).

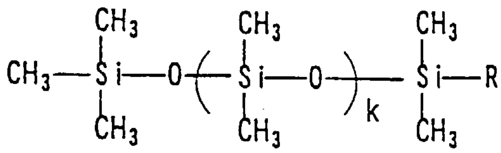 (1)

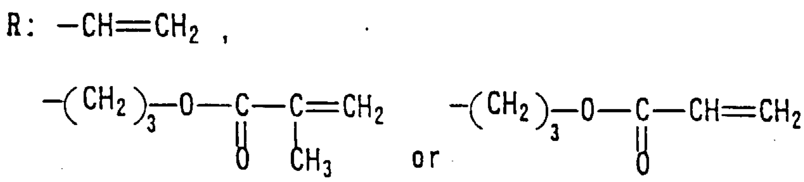

or

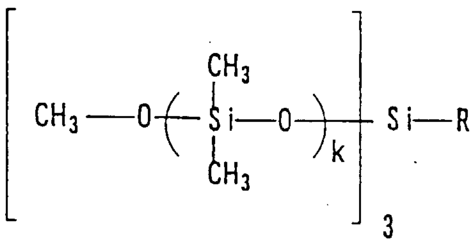 (2)

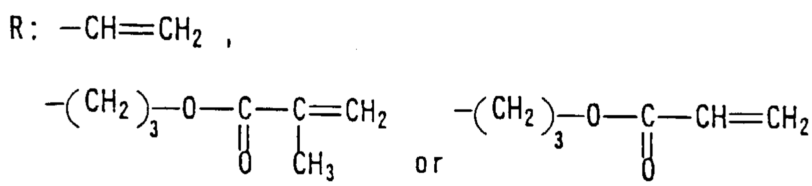

or

(wherein in both Formulae 1 and 2 « k » is an integer selected comprised between 1 to 15).

Preferably, « k » is comprised between 2 and 6. These polymerisable unsaturated monomers (C) having a polydimethylsiloxane structure can be used alone or in mixture of two or more monomers.

In the present invention, in addition to the above-mentioned polymerisable unsaturated monomer (A) which contains a hydrolysable silyl group, the polymerisable unsaturated monomer (B) which contains an ion-formable group and the polymerisable unsaturated monomer (C) which contains a polydimethylsiloxane structure, another polymerisable unsaturated monomer (D) is also copolymerised. This polymerisable unsaturated monomer (D) is appropriately selected among the various known kinds of polymerisable unsaturated monomers in order to obtain a suitable water-based coating.

According to the invention, the other polymerisable unsaturated monomer (D) is different from, namely does not include, the monomers included in the monomers (A), (B) and (C).

It should be noted that the monomer (D) is preferably employed for, for example, adjusting glass transition temperature (Tg) of a polymer notably in an emulsion. Monomer (D) is also preferably used to constitute the remaining

parts of the composition to provide 100 % of the components.

(Meth)acrylic-type monomers, aromatic vinyls, vinyl esters, halogenated vinyls, vinyl ethers (for example, vinylethyl ether or the like), vinylketones, (for example, methylvinylketone or the like), vinyl compounds having a heterocyclic ring (for example, N-vinylpyrrolidone, N-vinylimidazole, or other N-vinylidic compounds, vinylpirridine or the like), olefin-type monomers (for example, ethylene, propylene or the like) allyl compounds (for example allyl acetate or other allyl esters) can be given as examples of such polymerisable unsaturated monomers (D). These monomer (D) can be used alone or in mixture of two or more kinds of monomers.

The (meth)acrylic-type monomers of the polymerisable unsaturated monomer (D) also comprise, for example, (meth)acrylates, (meth)acrylamides, (meth)acrylonitrile or the like.

The (meth)acrylates can comprise for example, an alkyl(meth)acrylate [for example, methyl(meth)acrylate, ethyl(meth)acrylate, propyl(meth)acrylate, isopropyl(meth)acrylate, isobutyl(meth)acrylate, butyl(meth)acrylate, t-butyl (meth)acrylate, hexyl(meth)acrylate, octyl(meth)acrylate, 2-ethylhexyl(meth)acrylate, lauryl(meth)acrylate or other alkyl(meth)acrylates having from 1 to 18 carbon atoms], cycloalkyl(meth)acrylates [for example, cyclohexyl(meth)acrylate or the like], aryl(meth)acrylates [for example, phenyl(meth)acrylate or the like], aralkyl(meth)acrylates [for example, benzyl(meth)acrylate or the like], hydroxyalkyl(meth)acrylates [for example, 2-hydroxyethyl, 2-hydroxypropyl (meth)acrylate or other hydroxyalkyl(meth)acrylates containing from 2 to 4 carbon atoms, glycidyl(meth)acrylate, dialkylaminoalkyl(meth)acrylates [for example, 2-(dimethylamino)ethyl(meth)acrylate, 2-(diethylamino)ethyl(meth)acrylate or other dialkylaminoalkyl (meth)acrylates having an alkyl group containing 1 to 4 carbon atoms and an aminoalkyl group having 2 to 4 carbon atoms.

(Meth)acrylamides may comprise for example, (meth)acrylamides, hydoxyalkyl(meth)acrylamide [for example, N-methylol(meth)acrylamides or other N-hydroxyalkyl(meth)acrylamide having an alkyl group of 1 to 4 carbon atoms], alkoxyalkyl(meth)acrylamides [for example, N-methoxymethyl(meth)acrylamide or other N-$C_{1-4}$ alkoxy-$C_{1-4}$-alkyl(meth)acrylamides or the like], diacetone(meth)acrylamides or the like.

Relating to (meth)acrylic-type monomers, (meth)acrylate [for example, $C_{1-18}$alkyl(meth)acrylate, hydroxy-$C_{2-4}$-alkyl(meth)acrylate, glycidyl(meth)acrylate, di-$C_{1-4}$alkylamino-$C_{2-4}$alkyl(meth)acrylate] or the like, (meth)acrylamides or the like are preferably used.

Relating to (meth)acrylic-type monomers, $C_{2-10}$alkylacrylate, $C_{1-6}$ alkylmethacrylate, hydroxy-$C_{2-3}$-alkyl (meth)acrylate, glycidyl(meth)acrylate, di[$C_{1-3}$]alkylamino-C[$_{2-3}$alkyl(meth)acrylate] or the like are further preferably used.

Aromatic vinyls comprise, for example, styrene, α-methylstryrene, vinyltoluene or the like ; styrene being often used.

Vinyl esters comprise, for example, vinyl acetate, vinyl propionate, vinyl versate (VeoVa or the like). Vinyls containing a halogen atom comprise, for example, vinyl chloride, vinylidene chloride or the like.

Further, compounds having a silyl group such as those shown in the following General Formulae 16 to 18 may be used as other polymerisable unsaturated monomer (D).

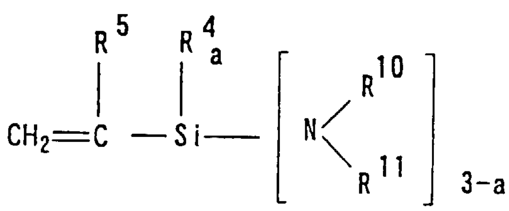

(16)

(wherein $R^4$ is an alkyl group having from 1 to 10 carbon atoms, an aryl group having 6 to 10 carbon atoms or an aralkyl group having from 7 to 10 carbon atoms, $R^5$ is a hydrogen atom or a methyl group, $R^{10}$ and $R^{11}$ are identical or different alkyl groups having from 1 to 10 carbon atoms ; « a » is an integer from 0 to 2).

An example of such a compound is for example vinyl bis(dimethylamino)methylsilane or the like.

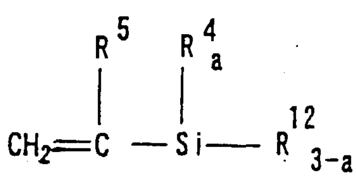

(17)

(wherein $R^4$ is an alkyl group having from 1 to 10 carbon atoms, an aryl group having 6 to 10 carbon atoms or an aralkyl group having from 7 to 10 carbon atoms, $R^5$ is a hydrogen atom or a methyl group, $R^{12}$ is an acyl group having 2 to 6 carbon atoms, « a » is an integer from 0 to 2).

Examples of such a compound are for example vinyl-tri-(acetyloxy)silane, vinyl-di(acetyloxy)methylsilane or the like.

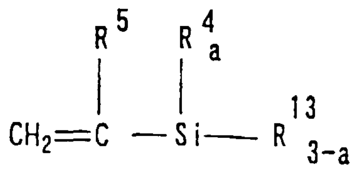

(18)

(wherein $R^4$ is an alkyl group having from 1 to 10 carbon atoms, an aryl group having 6 to 10 carbon atoms or an aralkyl group having from 7 to 10 carbon atoms, $R^5$ is a hydrogen atom or a methyl group, $R^{13}$ is an aryl group having 6 to 10 carbon atoms, « a » is an integer from 0 to 2).

Examples of such compounds are vinyl-triphenoxysilane or the like.

As such a polymerisable unsaturated monomer (D), a hard monomer [for example methyl(meth)acrylate, styrene or other monomer component for forming a homopolymer having a glass transition temperature from 80°C to 120°C (particularly from 90°C to 105°C)] and a soft monomer [for example, a $C_{2-10}$ alkyl acrylate or other monomer component for forming a homopolymer having a glass transition temperature from 85°C to 10°C (particularly from 85°C to 20°C) are usually used together.

When a hard monomer and a soft monomer are used together as a polymerisable unsaturated monomer (D), usually the composition ratio is not particularly limited ; for example an amount from 10% to 90% by weight of a hard monomer (for example from 15% to 85% by weight, preferably from 20% to 80% by weight and more preferably from 25% to 75% by weight, particularly from 30 to 70% by weight) can be used with an amount of from 10% to 90% by weight of a soft monomer (for example, from 15% to 85% by weight, preferably from 20% to 80% by weight and more preferably from 25% to 75% by weight, particularly from 30% to 70% by weight of a soft monomer).

In the present invention, each of the above-mentioned components of the copolymer are used according the following ratios. The polymerisable unsaturated monomer (A) containing a hydrolysable silyl group is used in an amount of from 0.5% to 50% by weight, the polymerisable unsaturated monomer (B) containing an ion-formable group is used in an amount of from 1% to 20% by weight ; the polymerisable unsaturated monomer (C) having a polydimethylsiloxane structure is used in an amount of from 1% to 40% by weight and the other polymerisable unsaturated monomer (D) is used in the remaining amount (100-((A)% + (B)% + (C)%)) to form a solution which is polymerized by a solution polymerization. The sum of the monomers (A) + (B) + (C) is less than 100% by weight.

The polymerisable unsaturated monomer (A) containing a hydrolysable silyl group is used in an amount of from 0.5% to 50% by weight of the total polymerisable unsaturated monomer and preferably in an amount of from 0.5% to 20% by weight. When the ratio of the monomer (A) is less than 0.5% by weight, there is sometimes problems regarding weakened water resistance, solvent resistance and adhesion of the cured film. On the other hand, when the amount of the monomer (A) is more than 50% by weight, there is sometimes some problems regarding lowered polymerisation stability and storage stability of the water-based emulsion.

The polymerisable unsaturated monomer (B) containing an ion-formable group is used in an amount of from 1% to 20% of the total amount of the polymerisable unsaturated monomers, and preferably from 2% to 10% by weight. When the amount of the monomer (B) is less than 1%, sometimes some aggregates appear during emulsification. When the amount of the monomer (B) is more than 20% by weight, the water resistance of the film formed is lowered.

The polymerisable unsaturated monomer (C) having a polydimethylsiloxane structure is used in an amount of from 1% to 40% by weight of the total amount of the polymerisable unsaturated monomers, and preferably from 2% to 30% by weight. When the amount of the monomer (C) is less than 1% by weight, modification by the polydimethylsiloxane is not efficient and the water resistance and the staining resistance of the film formed are lowered. When the amount of the monomer (C) is more than 40% by weight, some aggregates appear during emulsification and a stable emulsion cannot be obtained.

It is preferred that the amount of the other polymerisable unsaturated monomers (D) occupies the remaining part of the above-mentioned monomers (A), (B) (C) and (D).

The water-based emulsion used in the present invention is obtained by copolymerisation of the former monomer which are copolymerized by solution polymerization and then addition of water in the resin solution obtained to form an emulsion.

That is to say that the former copolymer components are mixed and copolymerised in the presence of a

suitable organic solvent. The resulting polymer is dissolved or dispersed in an alkali (for example triethylamine or other alkyl amines, morpholine or other cyclic amines, triethanolamine or other alkanolamines, pyridine, and ammonia or the like) or an acid [for example, inorganic acids (for example hydrochloric acid, sulfuric acid or the like) , organic acids (for example, acetic acid, propionic acid or other carboxylic acid, sulphonic acid or the like) or the like]. The polymerisation step may be a batch polymerisation or a continuous polymerisation.

The organic solvents that may be used in the polymerisation solution are, for example, alcohols (for example, ethanol, isopropanol, n-butanol or the like), aromatic hydrocarbons (for example, benzene, toluene, xylene or the like), aliphatic hydrocarbon (for example, pentane, hexane, and heptane, etc...), cycloaliphatic hydrocarbons (for example cyclohexane or the like), esters (for example, ethyl acetate, n-butyl acetate or the like), ketones (for example acetone, methylethylketone or the like), ether (for example diethylether, dioxane, tetrahydrofuran or the like). These organic solvents may be used alone or in mixture of two or more solvents. Isopropanol or other alcohols, toluene or other aromatic hydrocarbons, methyl ethyl ketone or other ketones are usually used as organic solvents.

The amount of organic solvent used is not limited. For example, the amount of organic solvent can be selected in a range of ratio of from 0.1/1 to 5/1, preferably from 0.5/1 to 2/1 based on the total amount of the polymerisable unsaturated monomers.

The polymerisation can be initiated via heating or irradiation with an electronic beam or ultra-violet rays. However the polymerisation is often initiated with a polymerisation-initiating agent.

For example, azo-type compounds [for example, azobis-isobutyronitrile, 2, 2-azobis(2, 4-dimethylvaleronitrile), azobis-cyano valeric acid, 2, 2-azobis(2-amidinopropane)hydrochloride, 2, 2-azobis(2-amidinopropane)acetate or the like), inorganic peracids (for example, potassium persulphate, sodium persulphate, ammonium persulphate or other persulphates and hydrogen peroxide), organic peracids (for example, benzoyl peroxide, di-t-butylperoxide, cumen hydroperoxide, di(2-ethoxyethyl)peroxydicarbonate) and redox catalysts (for example, sulphites or bisulphites (for example, salt of alkali metals, salts of ammonium or the like)], catalytic systems resulting from mixtures of L-ascorbic acid, erysorbic acid, or other reducers and persulphates (for example, salt of alkali metals, salt of ammonium or the like) and peracid compounds or other oxidants may be used as polymerisation initiators.

These initiators can be used alone or in mixture of two or more.

The amount of initiator used can be selected, for example, in a range from 0.01% to 20% by weight based on the total amount of the polymerisable unsaturated monomers and preferably from 0.01% to 10% by weight (for example from 0.1% to 10% by weight).

The reaction temperature of the solution polymerisation is, for example, from 50°C to 150°C and preferably from 70°C to 130°C. Further, the reaction time is, for example, from 1 to 10 hours, preferably from 2 to 7 hours. It is to be noted that the termination of the polymerisation can be determined by the extinction of the absorption ($1648cm^{-1}$) of double bonds in infra-red absorption spectra, by using gas chromatography or by detecting the reduction of the amount of monomer which has not reacted.

Further, when a cationic group such as an amino group, an amide group and a cation-formable group is contained in the polymer, the hydrophilicity is improved by using an acid and the polymer can be easily dissolved or emulsified. Such acids are for example inorganic acids (for example, hydrochloric acid, phosphoric acid, sulfuric acid, and nitric acid), organic acids (for example, formic acid, acetic acid, propionic acid, or other saturated aliphatic monocarboxylic acids, oxalic acid, adipic acid, or other aliphatic polycarboxylic acids ; (meth)acrylic acid or other unsaturated aliphatic monocarboxylic acids, maleic acid, itaconic acid or other unsaturated aliphatic polycarboxylic acids, lactic acid, citric acid or other aliphatic oxycarboxylic acids.

When the polymer contains a carboxylic group or other acid groups, the polymer is easily dissolved or emulsified by using a base. Such bases comprise, for example organic bases (for example triethylamine or other alkyl amine, morpholine or other cyclic amine, triethanolamine or other alkanolamines, pyridine or the like), inorganic bases (for example, ammonia, hydroxides of alkali metals or the like).

The amount of the acid used can be selected, for example, in the range basic group/acidic group = 0.3/1 to 1.5/1 by mol based on the total number of mole of acidic groups.

The emulsification of the polymer obtained via solution polymerisation can be carried out in the presence or absence of an organic solvent. When dissolving or carrying out a dispersion emulsification in the presence of an organic solvent, water soluble organic solvents (for example, isopropanol or other alcohols) are often used as organic solvents. In the case that the polymer has been emulsified in the presence of an organic solvent, this organic solvent can be removed by evaporation or the like after emulsification, or the emulsion may also contain this organic solvent.

Further, when the organic solvent is removed before emulsifying the polymer, an organic solvent having a low-boiling point is often used (for example, methyl ethyl ketone or other ketones).

When the polymer obtained via solution polymerisation is emulsified in the presence of an organic solvent, an additive is added to the organic solvent containing the polymer (for example, an emulsifier, a pH modifier, an acid or the like). Then after this addition, water is then added and the emulsification can be carried out. In this case, water is preferably added slowly and dropwise. The temperature during emulsification is preferably selected in low-range

temperatures, for example, not more than 70°C (for example from 5°C to 70°C), preferably not more than 50°C (for example from 10°C to 50°C).

Removal of the organic solvent after emulsification by the addition of water is often carried out at a temperature of not more than 80°C (for example, from 5°C to 80°C) under ordinary pressure or reduced pressure (for example from 0.0001 to normal atmosphere).

It is to be noted that it is possible to use in the solution polymerisation chain-transfer agents, for example, an alcohol such as catechol, thiols, mercaptans (for example, n-lauryl mercaptan, n-docecyl mercaptan, t-dodecyl mercaptan, 3-mercaptopropyltrimethoxysilane, 3-mercaptopropylmethyldimethoxysilane or the like) to adjust the molecular weight of the polymer.

The average diameter of the polymer particles contained in the resulting water-based emulsion is selected in a range in order to have no lowering of the dispersion stability and adhesion, for example, from 0.01µm to 2 µm, preferably from 0.01µm to 1 µm, and more preferably from 0.01µm to 0.5µm and most preferably from 0.01µm to 0.3µm.

This water-based emulsified resin (a water-based-polymer emulsion) is easy to handle because it is a resin composition which does not use specific crosslinked resin such as synthetic crosslinked resin like acrylic silicone oligomers which contain a hydrolysable alkoxysilyl group.

The water-based-coating composition of the present invention contains the above-mentioned water-based emulsion and colloidal silica.

This colloidal silica is a colloidal suspension of silicone dioxide or hydrated compounds thereof. In the present invention, any type of colloidal silica can be used. Normally, colloidal silica is obtained by allowing diluted hydrochloric acid to react with an aqueous solution of a silicate. However, in the present invention, the colloidal silica can also be obtained according to any other method.

According to the present invention, colloidal silica is preferably surface-treated by the silane compound shown by the following General Formula (S).

$$SiR^{S1}_{X+1}\,(OR^{S2})_{3-X} \tag{S}$$

in the General Formula (S), $R^{S1}$ is a hydrogen atom or a hydrocarbon group containing from 1 to 10 carbon atoms, $R^{S2}$ is a hydrogen atom or a hydrocarbon group of 1 to 10 carbon atoms and containing an ether bond, X is an integer from 0 to 2.

Methyl, ethyl, propyl, isopropyl, butyl, isobutyl, sec-butyl, hexyl or other low alkyl group or phenyl groups or the like are examples of hydrocarbon groups containing from 1 to 6 carbon atoms and which may be represented by $R^{S1}$.

Examples of $R^{S2}$ which represent a hydrocarbon group containing from 1 to 10 carbon atoms are the same lower alkyl groups as mentioned above, 2-methoxyethoxy group or other groups containing an ether bond or phenyl groups or the like.

Practically used examples of the silane compounds that may be represented by General Formula (S) are, for example, methyltrimethoxysilane, dimethyldimethoxysilane, trimethylmethoxysilane, methyltriethoxysilane, ethyltriethoxysilane, phenyltrimethoxysilane, phenyltriethoxysilane, methyltri(2-methoxyethoxy)silane or the like.

These compounds may be used alone or in mixture of two or more ; methyltrimethoxysilane is preferably used.

Surface treatment of the colloidal silica by the above-mentioned compounds can be carried out by stirring over a fixed free time of period, the colloidal silica to be treated and the above-mentioned silane compounds at a temperature between room temperature and 100°C, for example, from 50°C to 70°C.

According to such operations, SiOH groups of the surface of the colloidal silica can be linked to the SiOR groups of the above-mentioned silane compounds.

Further, the surface treatment of the colloidal silica can also be carried out by adding the non treated colloidal silica and the above-mentioned silane compounds in the above-mentioned emulsion, and then eventually stirring at a temperature between room temperature and 100°C, and preferably from 50°C to 70°C.

The water-based coating composition of the present invention promotes a condensation reaction in the colloidal silica itself and a condensation reaction between the colloidal silica and the silanol contained in the emulsion, even at a relatively low temperature such as a temperature approximately equal to 80°C, for example. Accordingly, it is possible to obtain a high property in a coating layer even at low baking temperatures.

In the water-based coating composition of the invention, the ratio of the above-mentioned water-based emulsion with respect to the colloidal silica ranges in the ratio of: water-based emulsion : colloidal silica = 9 : 1 to 5.5 : 4.5 by weight based on the solid content. When the amount of colloidal silica is less than the above value, an effect for improving staining resistance cannot be obtained. On the other hand, when the amount of colloid silica is too high, problems for forming films appear even if a water-based composition can be obtained.

The ratio is preferably 8.5/1.5 to 6/4, and more preferably 8/2 to 6/4.

The ratio of water-based emulsion with respect to the colloidal silica can be determined as usually.

Moreover, fluorine-containing resins, silicone resins, organic salts of sulphonic acid, organic salts of phosphoric acid, organic salts of carboxylic acids or other lubricants, antioxidants, ultra-violet rays absorbers, thermal stabilizers or other stabilizers, radical catchers, quenchers, anti-electrostatic agents, plasticisers, thickeners, anti-foaming agents or each kind of publicly known additive can be optionally added to the water-based coating composition of the present invention.

As described hereinabove, the water-based coating composition can be prepared. This water-based coating composition shows low air-pollution risks, toxicity and inflammability or the like and moreover shows a good workability.

## Examples and Comparative Examples

The present invention will be explained more specifically hereinafter on the basis of the following Examples. However, the present invention is not limited to these Examples.

### *Preparation of a water-based emulsion - Example 1*

219 weight parts of isopropyl alcohol (hereinafter abbreviated as IPA) were introduced into a 2 liter-reaction vessel equipped with a stirrer, a condenser, a dropping funnel, a nitrogen inlet and a thermometer. 0.62 weight parts of azo-bis-isobutyronitrile (hereinafter, abbreviated as AIBN) was then added and dissolved under stirring. The resulting mixture was heated at 80°C. As copolymerisable components, 135.7 weight parts of methylmethacrylate, 86.3 weight parts of n-butylacrylate, 7.39 weight parts of acrylic acid, 4.94 weight parts of 3-methacryloxypropyltrimethosilane (trademark A-174, manufactured by Nihon Yunika Co, LTd) and 12.3 weight parts of α-(3-methacryoxypropyl) polydimethylsiloxane (FM-0725, manufactured by Chisso Co, Ltd) were mixed together and added dropwise into the reaction apparatus through the dropping funnel over approximately 4 hours. After dropping, 0.25 weight parts of AIBN were dissolved in 25 weight parts of IPA and added dropwise into the reaction apparatus as an added catalyst ; the reaction was then continued for 2 more hours.

After polymerisation, 6.95 weight parts of an aqueous solution of 25% ammonia were added into the reaction vessel under stirring as well as 705 weight parts of water which were dropped into the reaction vessel for approximately 2 hours to form an emulsion.

After emulsification, IPA was evaporated off using a rotary evaporator to obtain the target water-based emulsion. The solid content of the water-based emulsion was of 40% by weight.

### *Preparation of a water-based emulsion - Example 2*

A polymerisation reaction and an emulsification were likewise carried out as explained in Example 1 except that 74.0 weight parts of n-butylacrylate and 24.7 weight parts of α-(3-methacryloxypropyl)polydimethylsiloxane (FM-0725) were used as copolymerisable components, to obtain the target emulsion. The solid content of the water-based emulsion was of 40% by weight.

### *Preparation of a water-based emulsion - Example 3*

A polymerisation reaction and an emulsification were likewise carried out as explained in Example 1 except that 49.3 weight parts of n-butylacrylate and 49.3 weight parts of α-(3-methacryloxypropyl)polydimethylsiloxane (FM-0725) were used as copolymerisable components to obtain a target emulsion. The solid content of this water-based emulsion was of 40% by weight.

### *Preparation of a water-based emulsion - Example 4*

A polymerisation reaction and an emulsification were likewise carried out as explained in Example 1 except that α-(3-methacryloxypropyl)polydimethylsiloxane (FM-0725) was not used as a copolymerisation component to obtain a target emulsion. The solid content of this water-based emulsion was of 40% by weight.

### *Example 1*

In 112.5 weight parts of the emulsion prepared in emulsion preparation-Example 1, 12.5 weight parts of colloidal silica Snowtex 40 (manufactured by Nissan Chemical Co, Ltd., the solid content : 40% by weight) was mixed to obtain a water-based coating composition.

***Example 2***

100 weight parts of the emulsion obtained in emulsion preparation-Example 1 was mixed with 25 weight parts of colloidal silica Snowtex 40 (as above mentioned) to obtain a water-based coating composition.

***Example 3***

100 weight parts of the emulsion obtained in emulsion preparation Example 2 was mixed with 25 weight parts of colloidal silica Snowtex 40 (as above mentioned) to obtain a water-based coating composition.

***Example 4***

100 weight parts of the emulsion obtained in emulsion preparation-Example 3 was mixed with 25 weight parts of colloidal silica Snowtex 40 (as above mentioned) to obtain a water-based coating composition.

***Example 5***

87.5 weight parts of the emulsion obtained in emulsion preparation-Example 1 was mixed with 37.5 weight parts of colloidal silica Snowtex 40 (as above mentioned) to obtain a water-based coating composition.

***Example 6***

75 weight parts of the emulsion obtained in emulsion preparation-Example 1 was mixed with 50 weight parts of colloidal silica Snowtex 40 (as above mentioned) to obtain a water-based coating composition.

***Comparative Example 1***

The emulsion of emulsion preparation Example 1 was used without any modifications.

***Comparative Example 2***

The emulsion of emulsion preparation Example 2 was used without any modifications.

***Comparative Example 3***

The emulsion of emulsion preparation Example 3 was used without any modifications.

***Comparative Example 4***

Colloidal silica Snowtex 40 (as above mentioned) was used without any modifications.

***Comparative Example 5***

118.75 weight parts of the emulsion obtained in emulsion preparation-Example 1 was mixed with 6.25 weight parts of colloidal silica Snowtex 40 (as above mentioned) to obtain a water-based coating composition.

***Comparative Example 6***

62.5 weight parts of the emulsion obtained in emulsion preparation Example 1 was mixed with 62.5 weight parts of colloidal silica Snowtex 40 (as above mentioned) to obtain a water-based coating composition.

***Comparative Example 7***

The emulsion of emulsion preparation Example 4 was used without any modifications.

***Comparative Example 8***

100 weight parts of the emulsion obtained in emulsion preparation Example 4 was mixed with 25 weight parts

of colloidal silica Snowtex 40 (as above mentioned) to obtain a water-based coating composition.

Each of the water-based coating compositions obtained in Examples 1 to 6 and Comparative Examples 1, 2, 3, 5, 7, 8 was tested on the basis on the following test items. It is to be noted that regarding Comparative Example 4 and 6, a film could not be formed because of an excessive amount of the colloidal silica.

***Test Items***

*1. water resistance test*

An acrylic plate was coated with a water-based coating composition having the solid content of 20% using a No. 12 bar coater and then dried and cured at 105°C for 5 minutes. Then, the acrylic plate was soaked into a water tank at 20°C for 7 days and the changes of the coating were visually evaluated.
⊙ means no change ; O : partial whitening ; Δ : whitening ; X : no coating

2. *Boiled water resistance test*

An acrylic plate was coated with a water-based coating composition containing the solid content of 20% using a No. 12 bar coater and then dried and cured at 105°C for 5 minutes. Then, the acrylic plate was soaked into a water tank at 80°C for 2 hours and the changes of the coating were visually evaluated.
⊙ means no change ; O : partial whitening ; Δ : whitening ; X : no coating

3. Staining resistance tests

A water-based solution containing 20% of Aquagloss (manufactured by Kansai Paint) was coated on an alumite-treated aluminum plate using a No. 20 bar coater and then dried and cured at 120°C for 3 minutes. A water-based coating composition containing a solid content of 20% was then coated on this plate using a No. 20 bar coater and then dried and cured at 120°C for 10 minutes.

This test plate was then placed outside a room with an angle of 45° towards the south and an atmospheric exposure test was continued for 9 weeks. The test surface was read with a full flat scanner (manufactured by Seiko Epson, trade mark GT-6500ART2) before the exposure test, after one week of exposure, after 2 weeks of exposure, after 5 weeks of exposure and after 9 weeks of exposure. The read appearance of the surface was treated with a picture processing software (manufactured by Adobe System Japan, Adobe Photoshop) and a computer (manufactured by Apple Computer, Power Macintosh 7600/120) and the pollution percentage was numerically evaluated ( = 100 x polluted surface area / exposed surface area). When there is no pollution, the pollution percentage is set to 0%, when all the surface is polluted, the pollution % is set at 100%.

After the tests, the test plates were washed with water of water supply and then the pollution percentage was then measured as explained above.

Fig. 1 shows the picture processing data of Example 2 after 2 weeks of the exposure test. The polluted parts are shown in black on the middle of the Figure. Fig. 2 shows the picture processing data of Example 2 after 9 weeks of exposure test. Fig. 3 shows the picture processing data of Example 2 after washing with water of water supply.

Fig. 4, Fig. 5 and Fig. 6 show the picture processing data of Comparative Example 1 after 2 weeks of exposure test, 9 weeks of exposure test and after washing with water supply, respectively.

Fig. 7, Fig. 8 and Fig. 9 show the picture processing data of Comparative Example 7 after 2 weeks of exposure test, 9 weeks of exposure test and after washing with water supply, respectively.

The results of the above-mentioned tests are shown in Table 1 and Table 2.

TABLE 1

| | Example 1 | Example 2 | Example 3 | Example 4 | Example 5 | Example 6 |
|---|---|---|---|---|---|---|
| Emulsion | preparation Example 1 | preparation Example 1 | preparation Example 2 | preparation Example 3 | preparation Example 1 | preparation Example 1 |
| amount of additive except Snowtex 40 | 11,1 % by weight | 25.0 % by weight | 25.0 % by weight | 25.0 % by weight | 42.9 % by weight | 66.7 % by weight |
| water resistance | ⊙ | ⊙ | ⊙ | ⊙ | ⊙ | ⊙ |

TABLE 1 (continued)

| | Example 1 | Example 2 | Example 3 | Example 4 | Example 5 | Example 6 |
|---|---|---|---|---|---|---|
| boiled water resistance | ⊙ | ⊙ | ⊙ | ⊙ | ⊙ | ⊙ |
| pollution % before exposure test | 0 | 0 | 0 | 0 | 0 | 0 |
| pollution % after 1 week exposure test | 0.33 | 0.26 | 0.20 | 0.17 | 0.21 | 0.18 |
| pollution % after 2 week exposure test | 0.53 | 0.35 | 0.32 | 0.29 | 0.30 | 0.29 |
| pollution % after 5 week exposure test | 2.91 | 1.64 | 1.45 | 1.23 | 1.58 | 1.19 |
| pollution % after 9 week exposure test | 45.26 | 23.01 | 20.61 | 18.18 | 20.10 | 17.26 |
| pollution % after washing | 0.42 | 0.10 | 0.09 | 0.08 | 0.08 | 0.07 |

TABLE 2

| | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|
| Emulsion | preparation Example 1 | preparation Example 2 | preparation Example 3 | | preparation Example 1 | preparation Example 1 | preparation Example 4 | preparation Example 4 |
| amount of additive except Snowtex 40 | | | | only Snowtex 40 | 5.3 % by weight | 100.0% by weight | | 25.0% by weight |
| water resistance | ⊙ | ⊙ | ⊙ | | ⊙ | | O | ⊙ |
| boiled water resistance | O | O | O | | O | | O | ⊙ |
| pollution % before exposure test | 0 | 0 | 0 | | 0 | | 0 | 0 |
| pollution % after 1 week exposure test | 0.35 | 0.34 | 0.33 | | 0.34 | | 0.42 | 0.34 |
| pollution % after 2 week exposure test | 0.56 | 0.55 | 0.53 | | 0.55 | | 0.66 | 0.51 |
| pollution % after 5 week exposure test | 5.34 | 5.10 | 4.93 | | 5.22 | | 8.38 | 6.35 |
| pollution % after 9 week exposure test | 75.18 | 71.29 | 68.57 | | 70.19 | | 81.64 | 61.63 |
| pollution % after washing | 0.93 | 0.91 | 0.86 | | 0.75 | | 26.42 | 19.82 |

According to Table 1 and 2, each of the Examples 1 to 6 has an excellent water resistance and boiled-water resistance and at the same time an excellent staining resistance. Compared with the Comparative Examples 1, 2 and 3 it can be confirmed that the staining resistance is improved by mixing colloidal silica. Particularly, in Examples 2 to 5, the content ratio of water-based emulsion and colloidal silica is in the suitable range and the staining resistance is then extremely good.

In Comparative Example 5, since the colloidal silica content is low, a improvement of the staining resistance is not obtained as in Comparative Example 1. In Comparative Examples 7 and 8, since the resin emulsion does not contain a polydimethylsiloxane structure, the staining resistance is not good.

Examples using surface-treated colloidal silica will be now described.

[Preparation Example 5 of surface-treated colloidal silica]

50 weight parts of methyltrimethoxysilane was added into 500 weight parts of colloidal silica Snowtex O (manufactured by Nissan Kagaku CO, Ltd; solid content of 20% by weight) and stirred for one hour at 60°C to obtain a surface-treated colloidal silica. (solid content : 27.3 % by weight).

***Example 7***

18.3 weight parts of surface-treated colloidal silica of Preparation Example 5 was mixed with 112.5 weight parts of the emulsion of Emulsion-Preparation Example 1 to obtain a water-based coating composition.

***Example 8***

36.7 weight parts of surface-treated colloidal silica of Emulsion-Preparation Example 5 was mixed with 100 weight parts of the emulsion of Preparation Example 1 to obtain a water-based coating composition.

***Example 9***

36.7 weight parts of surface-treated colloidal silica of Preparation Example 5 were mixed with 100 weight parts of the emulsion of Preparation Example 2 to obtain a water-based coating composition.

***Example 10***

36.7 weight parts of surface-treated colloidal silica of Preparation Example 5 were mixed with 100 weight parts of the emulsion of Preparation Example 3 to obtain a water-based coating composition.

***Example 11***

55.0 weight parts of surface-treated colloidal silica of Preparation Example 5 were mixed with 87.5 weight parts of the emulsion of Preparation Example 1 to obtain a water-based coating composition.

***Example 12***

73.3 weight parts of surface-treated colloidal silica of Preparation Example 5 were mixed with 75 weight parts of the emulsion of Emulsion-Preparation Example 1 to obtain a water-based coating composition.

***Comparative Example 9***

The surface-treated colloidal silica of Preparation Example 5 was used without any modifications.

***Comparative Example 10***

9.2 weight parts of surface-treated colloidal silica of Preparation Example 5 was mixed with 118.75 weight parts of the emulsion of Emulsion-Preparation Example 1 to obtain a water-based coating composition.

***Comparative Example 11***

91.7 weight parts of surface-treated colloidal silica of Preparation Example 5 was mixed with 62.5 weight

parts of the emulsion of Emulsion Preparation Example 1 to obtain a water-based coating composition.

***Comparative Example 12***

36.7 weight parts of surface-treated colloidal silica of Preparation Example 5 was mixed with 100 weight parts of the emulsion of Emulsion Preparation Example 4 to obtain a water-based coating composition.

Each of the water-based coating compositions obtained in Examples 7 to 12 and Comparative Examples 10 and 12 was tested on the basis on the following test items. It is to be noted that, regarding Comparative Example 9 and 11, a film could not be formed because of an excessive amount of colloidal silica.

***Test Examples***

*1. water resistance test*

An acrylic plate was painted with a water-based coating composition having a solid content of 20% using a No. 12 bar coater and then dried and cured at 105°C for 5 minutes. Then, the acrylic plate was soaked into a water tank at 20°C for 7 days and the changes of the coating were visually evaluated.
⊙ means no change ; O : partial whitening ; Δ : whitening ; X : no coating.

Separately, the changes of the film were visually evaluated in the same manner except that the curing conditions were 80°C for 5 minutes.

*2. boiled water resistance test*

An acrylic plate was painted with a water-based coating composition containing a solid content of 20% using a No. 12 bar coater and then dried and cured at 105°C for 5 minutes. Then, the acrylic plate was soaked into a water tank at 80°C for 2 hours and the changes of the coating were visually evaluated.
⊙ means no change ; O : partial whitening ; Δ : whitening ; X : no coating.
Separately, the changes of the film were visually evaluated in the same manner except that the curing conditions were 80°C for 5 minutes.

*3. Staining resistance tests*

A water-based coating composition containing a solid content of 20% was coated on a acrylic plate using a No. 12 bar coater and then dried and cured at 80°C for 5 minutes. Then carbon black was sprayed to form a film and heated at 60°C for 30 minutes. The resulting plate was then washed with water of water supply and the adherence of the carbon black onto a film was visually evaluated.
O : no adherence of the carbon black, Δ : partial adherence of the carbon black ; X : adherence of the carbon black.

The results of the above-mentioned tests are shown in Table III.

TABLE III

| | Example 7 | Example 8 | Example 9 | Example 10 | Example 11 | Example 12 | Comparative Example 9 | Comparative Example 10 | Comparative Example 11 | Comparative Example 12 |
|---|---|---|---|---|---|---|---|---|---|---|
| emulsion | Preparation Example 1 | Preparation Example 1 | Preparation Example 2 | Preparation Example 3 | Preparation Example 1 | Preparation Example 1 | | Preparation Example 1 | Preparation Example 1 | |
| amount of additive except the surface treated colloidal silica (% by weight) | 11.1 | 25.0 | 25.0 | 25.0 | 42.9 | 66.7 | used alone | 5.3 | 100.0 | 25.0 |
| water resistance (cured and dried at 80°C) | ⊙ | ⊙ | ⊙ | ⊙ | ⊙ | ⊙ | - | O | - | O |
| water resistance (dried and cured at 105°C) | ⊙ | ⊙ | ⊙ | ⊙ | ⊙ | ⊙ | - | O | - | ⊙ |
| boiled water resistance (dried and cured at 80°C) | ⊙ | ⊙ | ⊙ | ⊙ | ⊙ | ⊙ | - | Δ | - | Δ |
| boiled water resistance (cured and dried at 105°C) | ⊙ | ⊙ | ⊙ | ⊙ | ⊙ | ⊙ | - | O | - | ⊙ |
| pollution resistance | ⊙ | ⊙ | ⊙ | ⊙ | ⊙ | ⊙ | - | X | - | X |

On the basis of Table III, the coatings of Examples 7 to 12 show excellent water resistance, boiled water resistance and at the same time an excellent staining resistance due to the their content of surface-treated colloidal silica and this even when drying-curing at a relatively low temperature of 80°C.

In Comparative Example 10, since the content of surface-treated silica is low, there is no improvement of the staining resistance. In Comparative Example 12, the staining resistance is not sufficient because the emulsion resin does not contain a polydimethylsiloxane structure.

## Claims

1. A water-based coating composition containing a water-based emulsion and colloidal silica characterized in that said water-based emulsion is obtained via emulsifying a resin solution by adding water therein, said resin solution being obtained via a solution polymerisation of a mixture containing :

   - from 0.5% to 50% by weight of a polymerisable unsaturated monomer (A) which contains a hydrolysable silyl group ;
   - from 1% to 20% by weight of a polymerisable unsaturated monomer (B) which contains at least one kind of ion-formable group ;
   - from 1% to 40% of a polymerisable unsaturated monomer (C) which has a polydimethyl siloxane structure ; and
   - the remaining weight ratio [(100- (A) - (B) - (C)] of another polymerisable unsaturated monomer (D).

2. The water-based coating composition according to claim 1, characterized in that the weight ratio of the water-based emulsion and said colloidal silica being as follows in the resulting solid :
   water-based emulsion : colloidal silica : from 9 : 1 to 5.5 : 4.5, and preferably in the range of 8.5 : 1.5 to 6 : 4.

3. The water-based coating composition of claim 1 or 2, wherein said water-based emulsion is obtained via removing polymerisation solvent after emulsification.

4. The water-based coating composition of any one of claims 1 to 3, characterized in that said polymerisable unsaturated monomer (C) having a polymethyl siloxane structure comprises at least one sort of the polymerisable unsaturated monomer selected among polymerisable unsaturated monomer having a polymethyl siloxane shown on General Formula 1 and 2 :

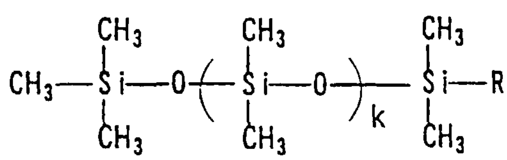

(1)

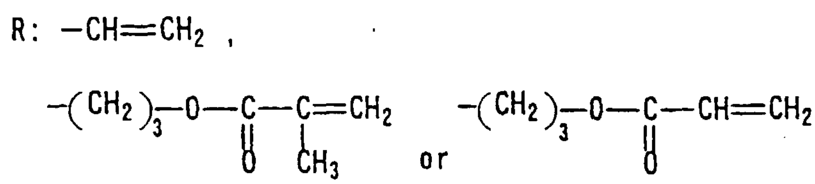

,

or

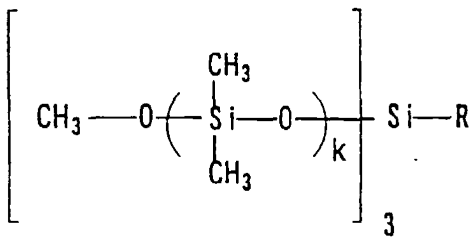

(2)

R: $-CH=CH_2$ ,

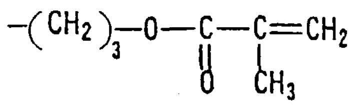

or

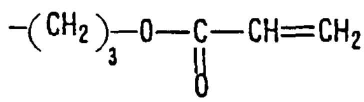

wherein k is an integer between 1 and 15.

**5.** The water-based coating composition of any one of claims 1 to 4, characterized in that said colloidal silica is obtained by a surface-treatment with a silane compound shown in Formula S :

$$SiR^{S1}{}_{X+1}\,(OR^{S2})_{3-X} \qquad (S)$$

wherein $R^{S1}$ is a hydrogen atom or a hydrocarbon group having from 1 to 10 carbon atoms, $R^{S2}$ is a hydrogen atom or a hydrocarbon group having from 1 to 10 carbon atoms and containing an ether bond and « x » is an integer from 0 to 2.

**6.** Use of a coating composition of any one of claims 1 to 5 as a coating such as an undercoat, an overcoat, a clear coat lining or the like, of a material such as wood, plastic, paper, metal and the like.

**7.** A method of coating a material, such as wood, plastic, metal or the like, notably by an undercoat, an overcoat, a clear coat lining or the like, characterized in that it comprises performing such a coating with a coating composition according to any one of claims 1 to 5.

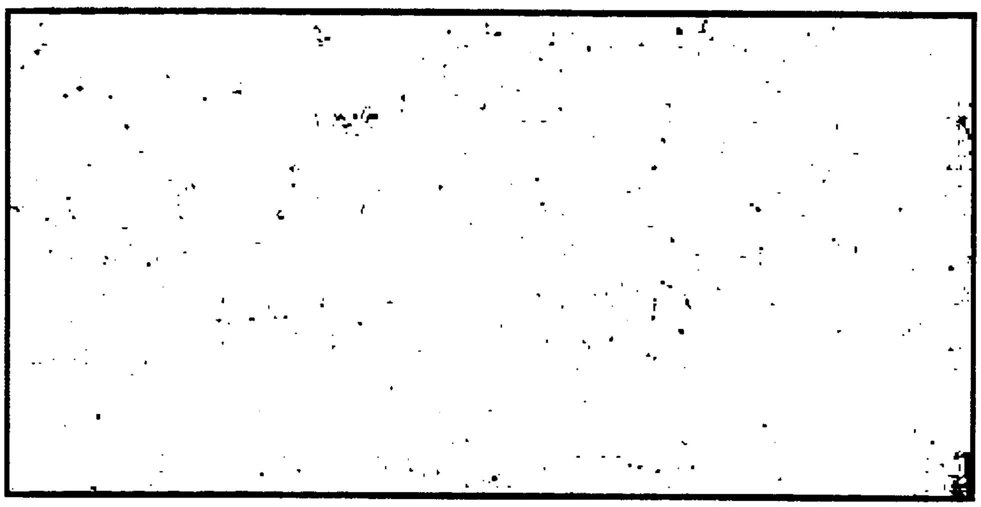

Figure 1

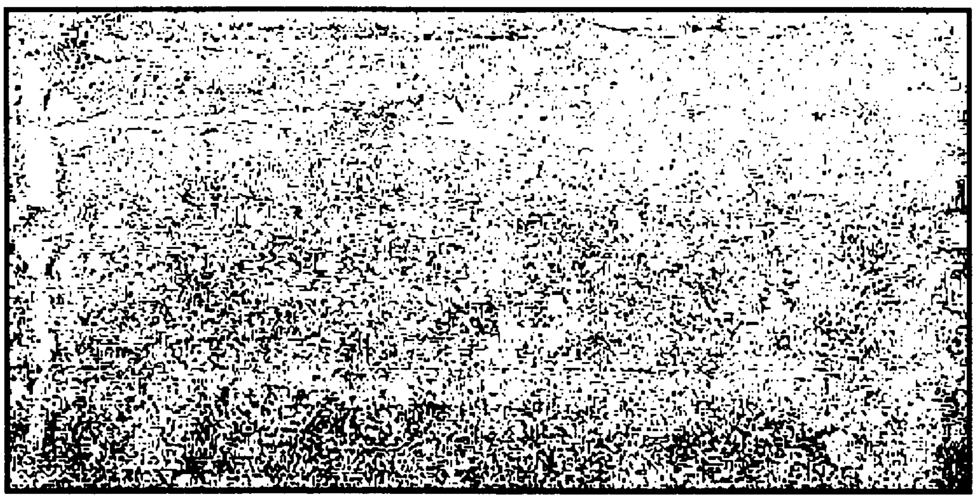

Figure 2

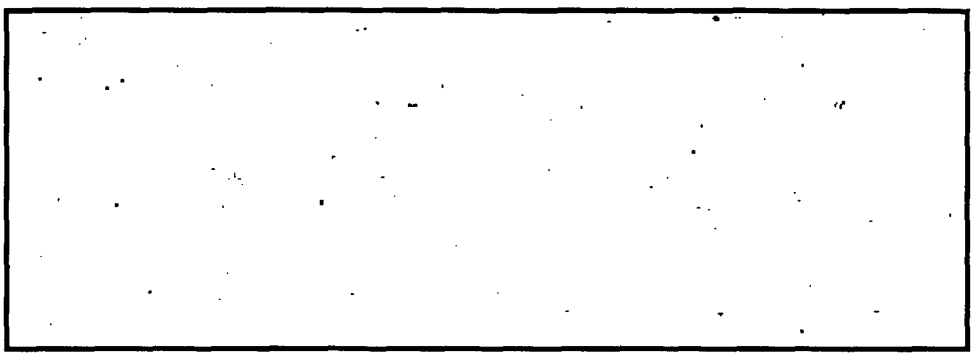

Figure 3

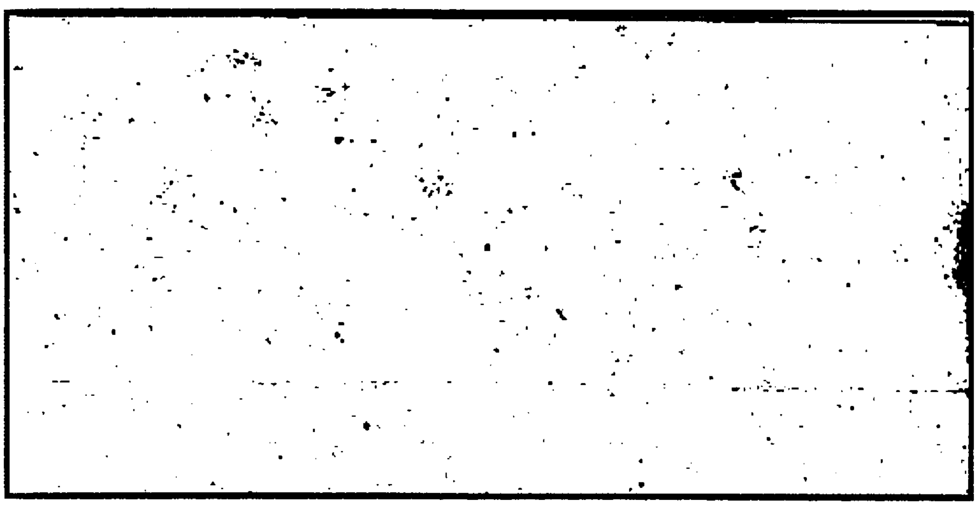

Figure 4

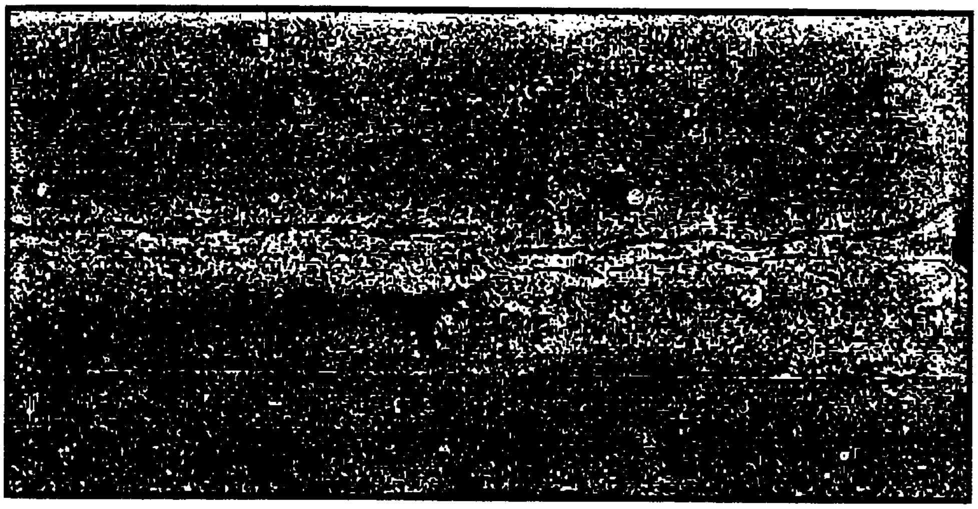

Figure 5

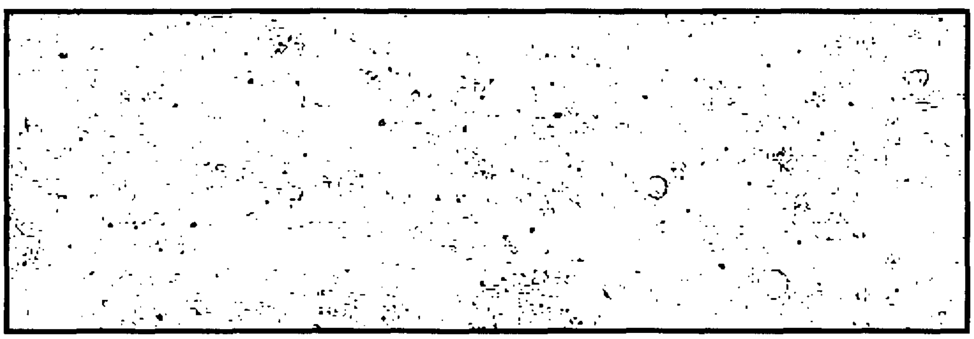

Figure 6

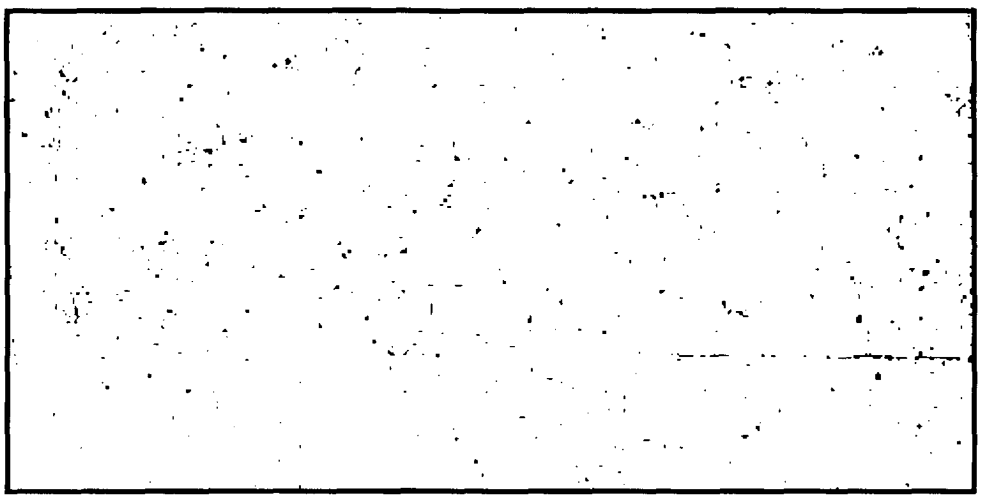

Figure 7

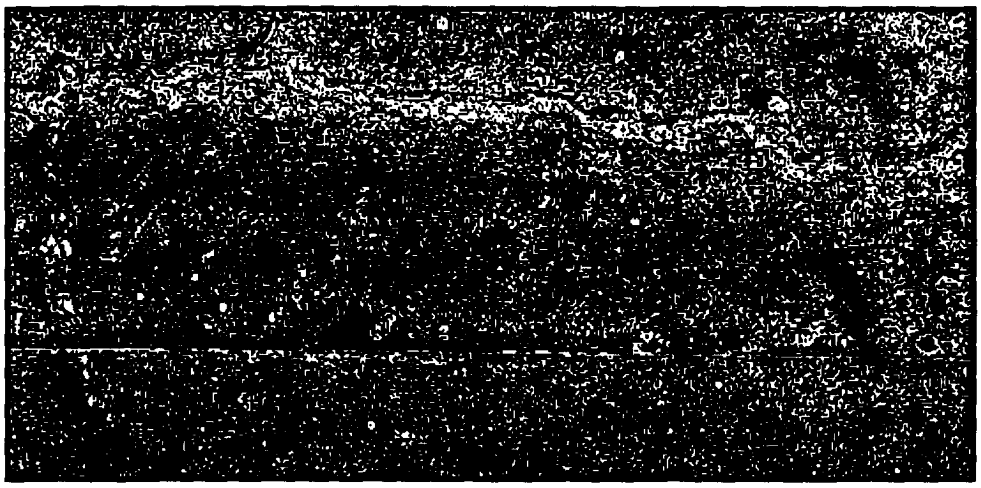

Figure 8

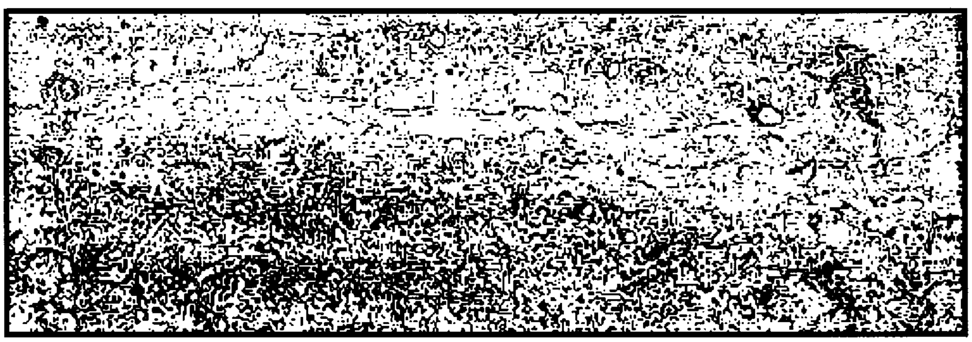

Figure 9

European Patent Office

# EUROPEAN SEARCH REPORT

Application Number
EP 99 40 2360

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DE 196 29 926 A (TOAGOSEI CO) 30 January 1997 (1997-01-30)<br>* example 9 *<br>* table 4 *<br>* claims * | 1-7 | C09D151/08<br>C08F290/06 |
| A | PATENT ABSTRACTS OF JAPAN vol. 005, no. 120 (C-065), 4 August 1981 (1981-08-04) & JP 56 057860 A (KANSAI PAINT CO LTD), 20 May 1981 (1981-05-20)<br>* abstract * | 1-7 | |
| A | EP 0 565 093 A (DOW CORNING TORAY SILICONE) 13 October 1993 (1993-10-13)<br>* example 3 *<br>* claims * | 1-7 | |
| A | GB 2 192 400 A (KANSAI PAINT CO LTD) 13 January 1988 (1988-01-13)<br>* examples 1,,PROD.EX.3 *<br>* claims * | 1-7 | TECHNICAL FIELDS SEARCHED (Int.Cl.7) |
| A | EP 0 352 339 A (TORAY SILICONE CO) 31 January 1990 (1990-01-31)<br>* column 6, line 45 - line 51 *<br>* column 7, line 33 - line 43 *<br>* example 1 *<br>* claims * | 1-7 | C09D<br>C08F |

The present search report has been drawn up for all claims

| Place of search | Date of completion of the search | Examiner |
|---|---|---|
| THE HAGUE | 17 December 1999 | Pollio, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 40 2360

This annex lists the patent family members relating to the patent documents cited in the above-mentioned European search report.
The members are as contained in the European Patent Office EDP file on
The European Patent Office is in no way liable for these particulars which are merely given for the purpose of information.

17-12-1999

| Patent document cited in search report | Publication date | Patent family member(s) | Publication date |
|---|---|---|---|
| DE 19629926 A | 30-01-1997 | JP 9031400 A | 04-02-1997 |
| | | JP 9110946 A | 28-04-1997 |
| | | FR 2737212 A | 31-01-1997 |
| | | GB 2303632 A,B | 26-02-1997 |
| JP 56057860 A | 20-05-1981 | JP 1435973 C | 25-04-1988 |
| | | JP 61047178 B | 17-10-1986 |
| EP 0565093 A | 13-10-1993 | JP 5287217 A | 02-11-1993 |
| GB 2192400 A | 13-01-1988 | DE 3623732 A | 21-01-1988 |
| EP 0352339 A | 31-01-1990 | JP 1011167 A | 13-01-1989 |
| | | AU 602596 B | 18-10-1990 |
| | | AU 1912788 A | 18-01-1990 |

EPO FORM P0459

For more details about this annex : see Official Journal of the European Patent Office, No. 12/82